Europäisches Patentamt

European Patent Office

Office européen des brevets

(11) Publication number: **0 089 114**
**B1**

(12) **EUROPEAN PATENT SPECIFICATION**

(45) Date of publication of patent specification: **10.09.86**

(51) Int. Cl.⁴: **B 01 D 46/04,** B 01 D 46/10,
B 01 D 46/06

(21) Application number: **83300681.0**

(22) Date of filing: **10.02.83**

(54) **A dust collector.**

(30) Priority: **26.02.82 JP 28098/82**

(43) Date of publication of application:
**21.09.83 Bulletin 83/38**

(45) Publication of the grant of the patent:
**10.09.86 Bulletin 86/37**

(84) Designated Contracting States:
**AT CH DE FR GB IT LI**

(56) References cited:
**DE-A-2 133 578**
**DE-B-2 147 979**

**CHEMICAL ENGINEERING, 9 April 1979, New
York M.N. KRAUS "Baghouses: separating and
collecting industrial dusts", pages 94-106**

(73) Proprietor: **Nishiyama, Shinroku
11-4, Komel-Cho
Takarazuka-City Hyogo Prefecture (JP)**

(72) Inventor: **Nishiyama, Shinroku
11-4, Komel-Cho
Takarazuka-City Hyogo Prefecture (JP)**

(74) Representative: **Higgins, Michael Roger et al
Marks & Clerk 57/60 Lincoln's Inn Fields
London WC2A 3LS (GB)**

EP 0 089 114 B1

Courier Press, Leamington Spa, England.

## Description

The present invention relates to a dust collector for removing powdery dust from a gas and is particularly useful in the collection of powdery dust during the disassembly of a mould after pouring in a foundry, the removal of a product, the reclamation of casting sand, etc. or to separate and collect powdery dust generated by delivery performance, vibration etc. during various processes of casting sand.

In a known dust collector used to separate and collect powdery dust from a gas, a filter chamber has been provided in the dust collector in order to pass gas containing powdery dust in the prescribed direction, and gas filtered and treated by passing through filter members provided in the filter chamber has been discharged from an outlet. In order to remove powdery dust for collection from the outside faces of the filter members, bursts of compressed air have been ejected intermittently against the inside faces of the filter members so as to expand the filter members rapidly and to vibrate them slightly. However, these bursts of compressed air are ejected against the flow of gas within said filter chamber. Owing to this the pressure of the compressed air falls rapidly. Accordingly, since the ejection pressure of the compressed air must be increased to counter the pressure losses it is necessary to provide a high capacity compressor.

Recently trials have been made to improve the efficiency by first closing the gas outlet so as to stop the gas flow in the dust collector before ejecting the compressed air but these trials were not very successful for the following reason. Even if the gas outlet is closed instantaneously, the gas flow within the dust collector is not stopped completely. Moreover, in the gas passage within the dust collector, the densities of the filtered gas and the gas to be filtered differ such that the air density within the gas passage where compressed air is ejected is less, so that even if compressed air is ejected instantaneously from here, the ejected compressed air and the remaining gas flow within the dust collector is offset so that an increase in the separating efficiency can not be attained.

Another known dust collector is disclosed in DE—B—2 147 979.

The object of the invention is to provide a dust collector in an improved form.

According to the present invention, there is provided a dust collector comprising a filter chamber having a plurality of hollow filter members therein, each filter member comprising a support structure with flexible sheet filtering material thereover and an outlet or outlets communicating with the interior of the filter member and through which filtered gas is discharged from the filter member, a gas inlet through which gas containing powdery dust can enter the filter chamber, a dust outlet through which dust filtered from the gas by the filter members can be discharged, a plurality of gas passages with gas outlets therein, each gas passage communicating with the outlet(s) of one or more filter members, and means for supplying compressed air to the interior of the filter members to expand the filtering sheet material thereof and to thereby dislodge dust which has collected on the outer surfaces thereof, characterised in that an atmospheric air inlet is provided in confronting relationship with each of the gas outlets, *in that* each gas passage is provided with an outlet closure valve and an atmospheric air inlet valve on a common operating member, and *in that* means are provided for moving the common operating member to close one valve as the other valve is opened and *vice versa* so that the outlet closure valve can be closed and the atmospheric air inlet valve can be opened to expose the gas passage to atmospheric air when compressed air is supplied to the interior of the filter member or members, associated with the gas passage.

Preferred and/or optional features of the invention are set forth in claims 2—8.

The gas passages can be closed one at a time so that all but those filter members connected to that gas passage can continue to filter dust from the gas. The gas passage is closed as compressed air is supplied to the interior of the associated filter members, and atmospheric air is introduced at the same time into that gas passage so that the air density within the gas passage is made identical to that of the remaining gas flow within the filter chamber, and compressed air is pressurized by the drag of this atmospheric air as compressed air is ejected, thus since an increase in the efficiency of separating powdery dust is intended by the efficient expanding and slight vibrating the filter members and also by the force of the injected compressed air being utilized effectively, as opposed to the system in which high pressure compressed air is injected against the flow of the gas as used in previous dust collectors, the purpose can be attained fully with low pressure compressed air; accordingly the capacity of compressor may be reduced, this being extremely useful in the aspect of energy-saving.

The invention will now be more particularly described, by way of example, with reference to the accompanying drawings, in which:—

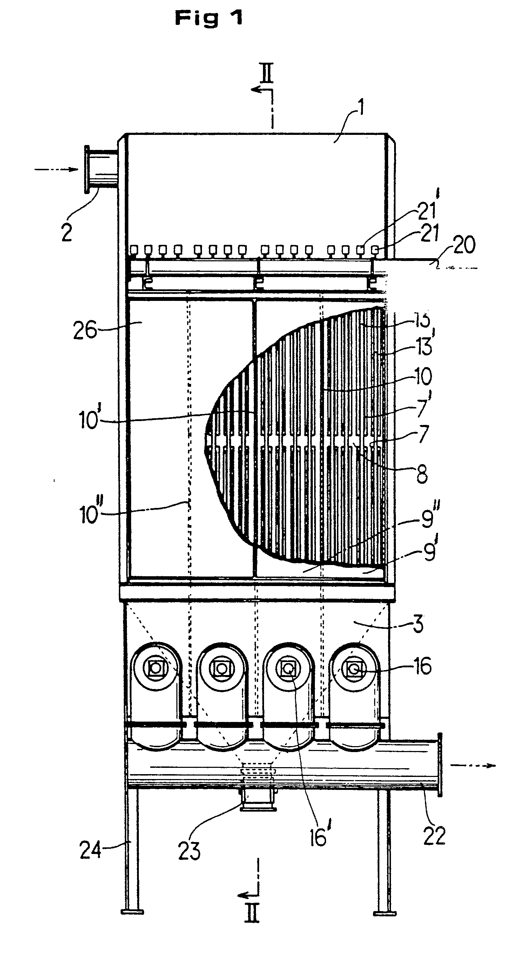

Figure 1 is a partially sectioned front view of one embodiment of a dust collector according to the present invention;

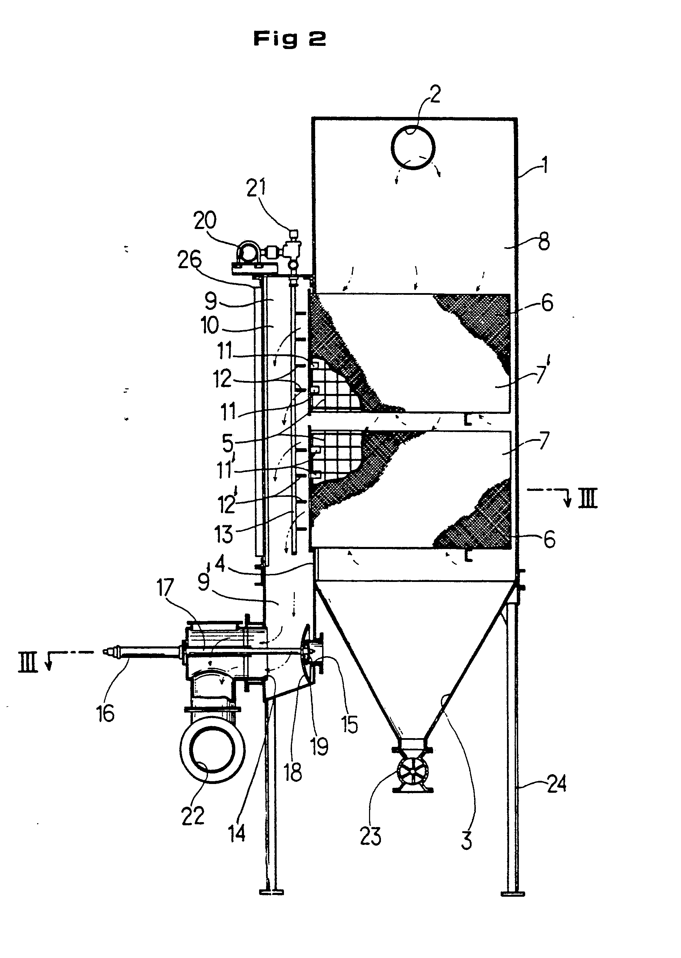

Figure 2 is a longitudinal sectional view taken along the line II—II in Fig. 1;

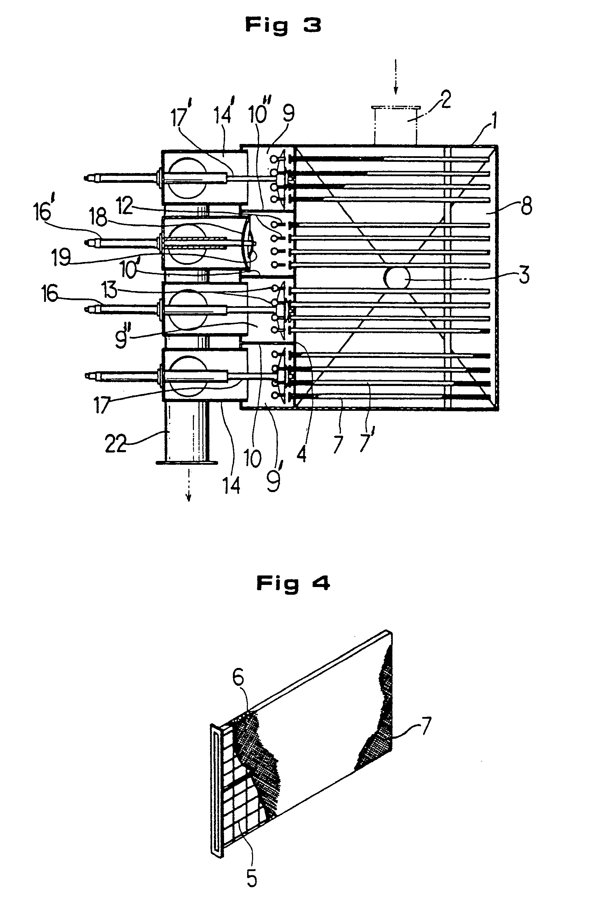

Figure 3 is a sectional view taken along the line III—III in Fig. 2;

Figure 4 is a partially sectioned perspective view of a filter member;

Figure 5 is a partially sectioned view showing the relationship between a filter member and the corresponding compressed air outlets;

Figure 6 is a cross-sectional view taken along the line VI—VI in Fig. 5; and

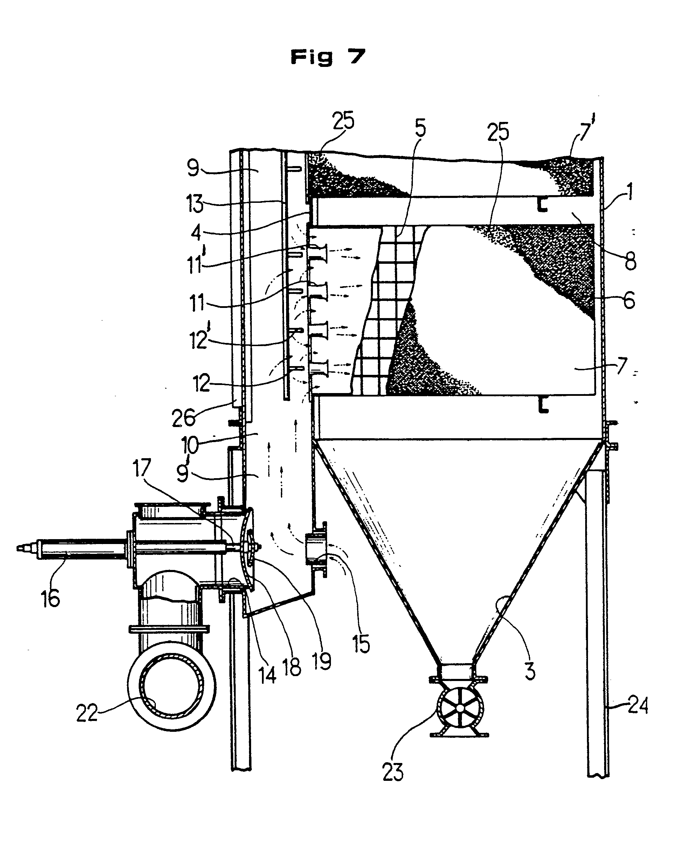

Figure 7 is an enlarged longitudinal sectional view of part of the body of the dust collector illustrated during the introduction of atmospheric air.

Referring now to the drawings, there is shown therein a dust collector body 1 provided with an open suction pipe 2 arranged at its upper end to suck in gas containing powdery dust and a dust disposal chute arranged at its lower end to discharge the separated powdery dust. Flat box-like filter members 7, 7', each comprising filter cloth 6 spread over the outer face of a filter frame 5, are inserted into a vertical partition 4 in the side of the dust collector body 1 in a laterally parallel arrangement stacked in a plurality of layers. The interior of the dust collector body 1 is divided into a filter chamber 8 and a gas chamber 9. A plurality of gas passages 9', 9" are formed by providing an appropriate number of separators 10, 10', 10" within the gas chamber 9 so as to sub-divide this chamber longitudinally. Compressed air pipes 13, 13' are arranged within the gas passages 9', 9", each pipe having protruding compressed air outlets 12, 12' facing toward corresponding venturi tubes 11, 11' attached to openings in the forward ends of the filter members 7, 7' at constant spacing. Gas outlets 14, 14' are provided at the lower ends of the gas passage 9', 9". Also atmospheric air inlets 15, 15' are provided opposite to said gas outlets 14, 14'. An outlet closing valve 18, 18' and an atmospheric air inlet valve 19, 19' is attached to the free end of a piston rod 17, 17' of each of a plurality of air cylinders 16, 16'. Each piston rod mounts one valve 18, 18' and one valve 19, 19' adjacent to yet opposed to one another. The valve 19, 19' opens and closes an inlet 15, 15' and the valve 18, 18' opens and closes a corresponding outlet 14, 14'. In the drawings 20 denotes a compressed air inlet pipe, 21, 21' denote electromagnetic valves, 22 denotes a gas outlet pipe communicating with the gas outlets 14, 14', 23 denotes a rotary valve for the disposal of powdery dust, 24 denotes the dust collector's frame, 25 denotes powdery dust, and 26 denotes a filter cloth exchange door.

The compressed air pipes 13, 13' are connected to one end of the compressed air inlet pipe 20 through the electromagnetic valves 21, 21', and the other end of this compressed air inlet pipe 20 is connected by a pipe to a compressor (not shown). Compressed air is emitted from the compressed air outlets 12, 12', toward respective venturi tubes 11, 11' in the filter members 7, 7' at prescribed time intervals and within each gas passage 9', 9" successively under the control of the electromagnetic valves 21, 21' so that the filter cloth is expanded rapidly and vibrated slightly to remove powdery dust adhering to the outer surfaces thereof.

The gas outlets 14, 14' and atmospheric air inlets 15, 15', provided opposite each other in the gas flow passage 9', 9", are arranged so that one or other is always closed.

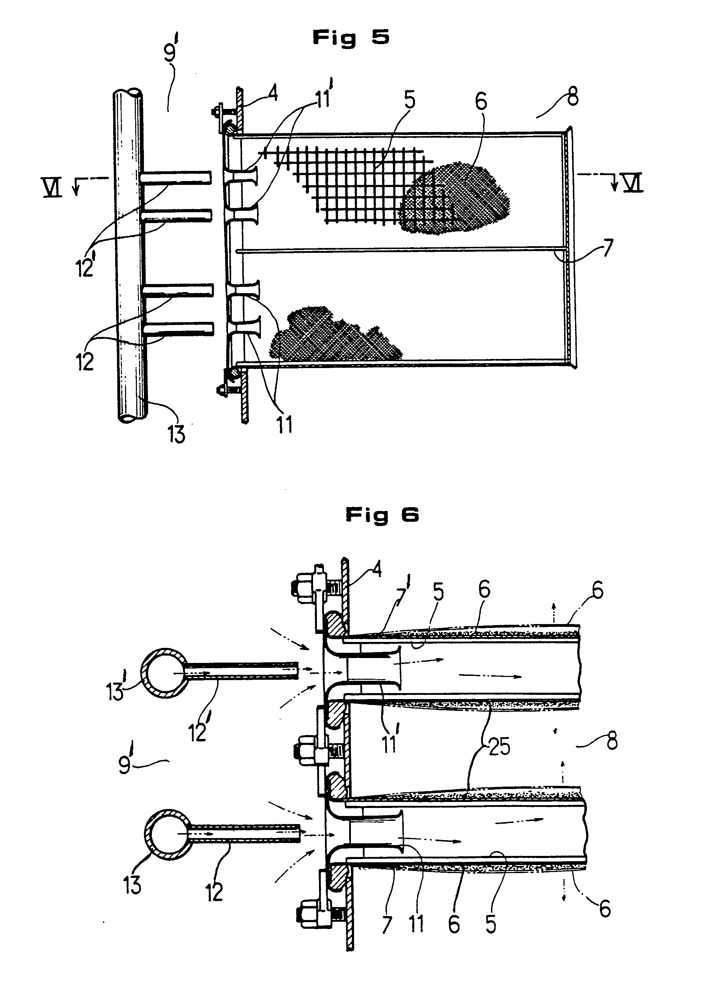

The sequence of operation will now be explained. By opening the gas outlets 14, 14', gas containing powdery dust is introduced into the filter chamber 8 from the suction pipe 2 by a blower provided within the gas outlet pipe 22, and the gas containing the powdery dust is filtered by the filter cloth 6 covering the filter members 7, 7'. The gas then passes through the longitudinally subdivided gas passages 9', 9" from the openings at the end of the filter members 7, 7' and is discharged through the gas outlets 14, 14'. As the gas containing the powdery dust is filtered, minute particles of powdery dust 25 gradually build up on the outer face of the filter cloth 6 and as a result the gas-filtering properties of the filter members 7, 7' deteriorate. The air cylinders 16, 16' are operated individually and in succession at predetermined time intervals so as to close the respective gas outlet 14 by its outlet closing valve 18, and open the associated atmospheric air inlet 15 by its air inlet valve 19. At this time, gas is passing from the filter chamber toward this gas passage 9' through the filter member 7, in spite of the rapid closing of the gas outlet 14. Accordingly the air within this gas passage 9' attains a partial vacuum, but since the atmospheric air inlet 15 is opened as the gas outlet 14 is closed, atmospheric air is introduced so that the partial vacuum disappears, and the gas flow is stopped instantaneously because it becomes identical to the remaining gas flow. When compressed air is rapidly injected at high pressure from the compressed air outlets 12, 12' toward the venturi tubes 11, 11', said high pressure air is at a higher pressure than the atmospheric air introduced through the atmospheric air inlet 15 and so pressurises the interior of filter members 7, as shown in Fig. 6, to rapidly expand and vibrate slightly the filter cloth 6 so that powdery dust 25 built up on the outer face of the filter cloth is removed. Thus, compressed air is ejected in succession from the gas passages 9', 9", thereby causing the separated powdery dust to drop into the disposal chute 3. The atmospheric air inlet 15 is closed by operating the air cylinder 16 again and the discharge of gas from the gas outlet 14 recommences. Since this series of powdery dust separating steps is performed in succession in a cycle involving each gas passage 9', 9", it has the advantage that a definite flow rate of filtered gas is always obtained from the other gas passages.

In this embodiment, the gas chamber is divided from the filter chamber in conventional manner but in addition it is subdivided longitudinally so as to form a plurality of vertical gas passages. Compressed air outlets are provided in each passage and flat box-like filter members are mounted opposite to said outlets. Hence, the amplitude of the filter members' movement by the compressed air is larger than that of the known cylindrical type of filter member and thereby the ability of the compressed air to dislodge the separated dust from the filter cloth is improved. Moreover, since an atmospheric air inlet is provided at the lower end of each gas passage as well as the gas outlet, and atmospheric air is added to the ejected compressed air without causing pressure losses, the filter members are efficiently expanded and vibrated slightly, and an effective and sure separation of powdery dust is carried out compared with the quantities of compressed air injected.

## Claims

1. A dust collector comprising a filter chamber (8) having a plurality of hollow filter members (7) therein, each filter member comprising a support structure (5) with flexible sheet filtering material (6) thereover and an outlet or outlets (11) communicating with the interior of the filter member and through which filtered gas is discharged from the filter member, a gas inlet (2) through which gas containing powdery dust can enter the filter chamber, a dust outlet (3) through which dust filtered from the gas by the filter members can be discharged, a plurality of gas passages (9') with gas outlets (14) therein, each gas passage communicating with the outlet(s) of one or more filter members, and means (12, 13) for supplying compressed air to the interior of the filter members to expand the filtering sheet material thereof and to thereby dislodge dust which has collected on the outer surfaces thereof, characterised in that an atmospheric air inlet (15) is provided in confronting relationship with each of the gas outlets (14), in that each gas passage (9') is provided with an outlet closure valve (18) and an atmospheric air inlet valve (19) on a common operating member (17), and in that means are provided for moving the common operating member to close one valve as the other valve is opened and vice versa so that the outlet closure valve can be closed and the atmospheric air inlet valve can be opened to expose the gas passage to atmospheric air when compressed air is supplied to the interior of the filter member or members, associated with the gas passage.

2. The dust collector of claim 1, characterised in that the filter members (7) are of flat box-like shape.

3. The dust collector of claim 2, characterised in that the filter members (7) are arranged, in each of two or more layers, in parallel spaced side by side relationship.

4. The dust collector of any one of the preceding claims, characterised in that a blower is provided downstream of the gas passages (9') for drawing the gas to be filtered through the apparatus.

5. The dust collector of any one of the preceding claims, characterised in that the compressed air supply means comprises a plurality of pipes (13) having protruding compressed air outlets (12) arranged toward the outlets (11) of the filter members.

6. The dust collector of any one of the preceding claims, characterised in that outlets (11) of the filter members comprise venturi tubes.

7. The dust collector of any one of the preceding claims, characterised in that the means for moving the common operating member (17) associated with each gas passage (9') comprises a fluid pressure operated piston and cylinder unit (16, 17).

8. The dust collector of any one of the preceding claims, characterised in that the filter chamber (8) and gas outlet passages (9') are in a common housing (1) and are separated from one another by partitions and/or separators (4, 10).

## Patentansprüche

1. Staubsammler mit einer Filterkammer (8), die mehrere hohle Filterglieder (7) enthält, von denen jedes einen Trägeraufbau (5) mit einem herumgelegten, flexiblen, bahnförmigen Filtermaterial (6) und einen oder mehrere Auslässe (11) enthält, die mit dem Inneren des Filterglieds in Verbindung stehen und durch die gefiltertes Gas aus dem Filterglied abgegeben wird, einem Gaseinlaß (2), durch den Gas, das aus kleinen Partikeln bestehenden Staub enthält, in die Filterkammer eindringen kann, einem Staubauslaß (3), durch den der durch die Filterglieder aus dem Gas ausgefilterte Staub abgegeben werden kann, mehreren Gasdurchlässen (9'), in denen Gasauslässe (14) angebracht sind, wobei jeder Gasauslaß mit dem oder den Auslässen eines oder mehrerer Filterglieder in Verbindung steht, und Mitteln (12, 13) zum Zuführen von Druckluft zum Innern der Filterglieder, damit sich deren bahnförmiges Filtermaterial ausdehnt und der Staub, der sich auf dessen Außenfläche angesammelt hat, davon getrennt wird, dadurch gekennzeichnet, daß in einer Gegenüberlage zu jedem der Gasauslässe (14) ein Umgebungslufteinlaß (15) angebracht ist, daß jeder Gasdurchlaß (9') mit einem Auslaßabsperrventil (18) und einem Umgebungsluft-Einlaßventil (19) auf einem gemeinsamen Betätigungsglied (17) versehen ist und daß Mittel vorgesehen sind, die das gemeinsame Betätigungsglied zum Schließen eines Ventils bewegen, wenn das andere Ventil geöffnet wird und umgekehrt, so daß das Auslaßabsperrventil geschlossen und das Umgebungsluft-Einlaßventil geöffnet werden kann, damit der Gasdurchlaß der Umgebungsluft ausgesetzt wird, wenn Druckluft in das Innere des oder der Filterglieder eingeführt wird, die dem Gasdurchlaß zugeordnet sind.

2. Staubsammler nach Anspruch 1, dadurch gekennzeichnet, daß die Filterglieder (7) eine flache, schachtelartige Form haben.

3. Staubsammler nach Anspruch 2, dadurch gekennzeichnet, daß die Filterglieder (7) in jeder von zwei oder mehr Schichten parallel im Abstand voneinander Seite an Seite angeordnet sind.

4. Staubsammler nach einem der vorhergehenden Ansprüche, dadurch gekennzeichnet, daß auf der Abströmseite der Gasdurchlässe (9') ein Gebläse vorgesehen ist, damit das zu filternde Gas durch das Gerät gezogen wird.

5. Staubsammler nach einem der vorhergehenden Ansprüche, dadurch gekennzeichnet, daß die Mittel zum Zuführen von Druckluft mehrere Röhren (13) enthalten, die vorstehende Druckluftauslässe (12) aufweisen, die gegen die Auslässe (11) der Filterglieder gerichtet sind.

6. Staubsammler nach einem der vorhergehenden Ansprüche, dadurch gekennzeichnet, daß die Auslässe (11) der Filterglieder aus Venturirohren bestehen.

7. Staubsammler nach einem der vorhergehenden Ansprüche, dadurch gekennzeichnet, daß die Mittel zum Bewegen des jedem Gasdurchlaß (9') zugeordneten gemeinsamen Betätigungsglieds (17) aus einer druckmittelbetätigten Kolben- und Zylindereinheit (16, 17) bestehen.

8. Staubsammler nach einem der vorhergehenden Ansprüche, dadurch gekennzeichnet, daß die Filterkammer (8) und die Gasdurchlässe (9') in einem gemeinsamen Gehäuse (1) angebracht und durch Zwischenwände und/oder Trennwände (4, 10) voneinander getrennt sind.

**Revendications**

1. Collecteur de poussières comprenant une chambre de filtrage (8) munie d'une pluralité de pièces de filtrage creuses (7), chaque pièce de filtrage comprenant une structure de support (5) formée d'un matériau de filtrage (6) en forme de feuilles flexibles et une ou des sorties (11) communiquant avec l'intérieur des pièces de filtrage et à travers lesquelles un gaz filtré est séparé des pièces de filtrage, une entrée de gaz (2) à travers laquelle le gaz contenant de la poussières pulvérulente peut entrer dans la chambre de filtrage, une sortie de poussières (3) à travers laquelle la poussière filtrée hors du gaz par la pièce de filtrage peut être déchargée, une pluralité de passages pour le gaz (9') avec des sorties (14) pour le gaz dans ces passages, chaque passage pour le gaz communiquant avec les sorties d'une ou de plusieurs pièces de filtrage, et des moyens (12, 13) pour fournir de l'air comprimé à l'intérieur des pièces de filtrage pour déployer le matériau de filtrage en feuilles pour ainsi chasser la poussière qui a été collectée sur les surfaces extérieures de la pièce de filtrage, caractérisé en ce qu'une entrée d'air atmosphérique (15) est prévue en position faisant face à chacune des ouvertures pour le gaz (14), en ce que chaque passage pour le gaz (9') est pourvu d'une valve de fermeture d'orifice de sortie (18) et d'une valve d'entrée d'air atmosphérique (19) sur une pièce de fonctionnement commune (17) et en ce que des moyens sont prévus pour faire mouvoir cette pièce de fonctionnement commune pour fermer une valve quand l'autre valve est ouverte et vice versa si bien qu'une valve de fermeture de sortie peut être fermée et qu'une valve d'entrée d'air atmosphérique peut être ouverte pour exposer le passage pour le gaz à l'air atmosphérique quand l'air comprimé est fourni à l'intérieur de la pièce ou des pièces de filtrage associée(s) avec le passage pour le gaz.

2. Le collecteur de poussières de la revendication 1, caractérisé en ce que les pièces de filtrage (7) ont la forme de boîtiers plats.

3. Le collecteur de poussières de la revendication 2, caractérisé en ce que les pièces de filtrage (7) sont disposées en couches de deux ou de plus de deux, côte à côte en parallèle.

4. Le collecteur de poussières de l'une des revendications précédentes caractérisé en ce qu'un dispositif de soufflage est prévu en aval des passages pour le gaz (9') pour attirer le gaz à filtrer dans l'appareil.

5. Le collecteur de poussières de l'une des revendications précédentes caractérisé en ce que les moyens de fourniture de l'air comprimé comprennent une pluralité de tuyaux (13) ayant des sorties proéminentes pour l'air comprimé (12) disposées vers les sorties (11) des pièces de filtrage.

6. Le collecteur de poussières de l'une des revendications précédentes caractérisé en ce que les sorties (11) des pièces de filtrage comprennent des tubes de venturi.

7. Le collecteur de poussières de l'une des revendications précédentes caractérisé en ce que les moyens pour faire mouvoir la pièce de fonctionnement commune (17) associée avec chacun des passages pour le gaz (9') comprennent un piston mu par un fluide sous pression et un cylindre (16, 17).

8. Le collecteur de poussières de l'une des revendications précédentes caractérisé en ce que la chambre de filtrage (8) et les passages de sortie pour le gaz (9') sont dans un carter commun (1) et sont séparés l'une des autres par des cloisons et/ou des séparateurs (4, 10).

# Fig 1

# Fig 2

**Fig 3**

**Fig 4**

## Fig 5

## Fig 6

## Fig 7